# EUROPEAN PATENT SPECIFICATION

(11) **EP 3 693 212 B1**
(45) Date of publication and mention of the grant of the patent: **14.12.2022**
(21) Application number: 19155499.7
(22) Date of filing: 05.02.2019
(51) Int. Cl.: B60N 2/70, B60N 2/66, A47C 7/46

(54) **SUSPENSION MAT FOR A BACKREST OF A VEHICLE SEAT**
AUFHÄNGUNGSMATTE FÜR EINE RÜCKENLEHNE EINES FAHRZEUGSITZES
TAPIS DE SUSPENSION POUR DOSSIER DE SIÈGE DE VÉHICULE

(43) Date of publication of application: 12.08.2020
(73) Proprietor: FICO CABLES LDA, 4470-263 Vermoim-Maia (PT)
(72) Inventor: DE CASTRO FARIA, Manuel António, 4470-263 Vermoim-Maia (PT); DA SILVA LOPES, Pedro João, 4470-263 Vermoim-Maia (PT)
(74) Representative: Mader, Joachim

(56) References cited:
- EP-A1- 1 733 650
- DE-U1- 29 706 397
- DE-U1-202009 000 629

## Description

### 1. Technical field

The present invention relates to a suspension mat for a backrest of a vehicle seat, preferably a seat of a motor vehicle, like a car. The invention further relates to a method for assembly of a suspension mat.

### 2. Prior art

In a vehicle seat, typically, a backrest support is integrated into a backrest of the vehicle seat. The backrest support functions as a support pad for the above arranged cushioning of the vehicle seat and as a support for a passenger sitting in the vehicle seat. Thereby, the backrest support provides support and comfort for the passenger while in a driving position with the aim to minimize any discomfort of the passenger even after several hours of driving. Thus, the backrest support has to comply with a function required by the passenger.

A favorable functioning of the backrest support is commonly evaluated in the development phase of the backrest support and parameters are set that influence the structure of the backrest support. As a result, the structure of the backrest support can be a fixed configuration or an adjustable configuration. The fixed configuration essentially comprises a suspension mat that is suspended into a frame of the vehicle seat. Thereby, the shape and suspension or cushioning properties or the backrest support cannot be changed by the passenger afterwards, i.e. they are fixed.

In an adjustable configuration the backrest support can be adjusted by a passenger after installation of the backrest support into the vehicle seat. To this end, the backrest support can comprise a suspension mat that is adjustable in the lumbar region for providing more or less support in this region. By the adjustment of the lumbar region the passenger can change the shape and/or the cushioning properties, e.g. the stiffness of the suspension mat, and thus the seating experience for a passenger in the vehicle seat, in said lumbar region.

Commonly the adjustment of a suspension mat in the lumbar region is done via manual or electric actuators that adjust the effective length of adjustment cables, in particular Bowden cables, connected to the suspension mat.

EP 1680 984 A1 shows an exemplary suspension mat that is actuated via a Bowden cable. This kind of actuation has the advantage that the actuator can be attached freely at the backrest frame. Further, this document shows an additional sheath or conduit of the Bowden cable that guides the cable of the Bowden cable from one side of the suspension mat to the opposite side. The sheath or conduit is attached at both ends thereof to the two side members of the suspension mat via attachment means and is longer than width of the suspension mat. Thereby, the Bowden cable arrangement adjusts the distance between the side members of the suspension mat and a backrest frame for pulling the lumbar area to the front of the backrest but does not change the suspension properties of the suspension mat in the lumbar area.

EP 1 733 650 A1 discloses that in order to symmetrically act on a support member of a support assembly on both sides using a single Bowden cable, a traction cable arrangement is used with comprises the Bowden cable, a first traction wire, and a coupling device for coupling the first traction wire to the Bowden cable. The first traction wire is fixedly attached to the coupling device and extends therefrom in a first direction. The sheath of the Bowden cable is fixedly attached to the coupling device, and the wire of the Bowden cable extends from the coupling device in a second direction substantially opposite to the first direction and forms a second traction wire. The first traction wire and the second traction wire are slidably held on the support member and are connected to a seat frame at their ends. When the wire of the Bowden cable is retraced with respect to the sheath, the second traction wire is shortened, the coupling device is displaced in the extending direction of the second traction wire, whereby a tensile force is also generated in the first traction wire. Consequently, the first traction wire and the second traction wire symmetrically act on the support member on both sides thereof.

Document DE 20 2009 000 629 U1 discloses a lumbar support with a molded part pivotably supported on a wire mat.

It is the problem of the present invention to provide a suspension mat and a method for the assembly of a suspension mat that is easier in construction than the prior art and does provide a better adjustment effect in the lumbar area for the passenger.

### 3. Summary of the invention

The problem is solved by a suspension mat for a backrest of a vehicle seat according to claim 1 and a method for the assembly of a suspension mat according to claim 15.

Preferably the problem is solved by a suspension mat for the backrest of a vehicle seat, comprising a mat element; a lumbar plate arranged at the lumbar area of the mat element, having a plate shape, and extending at least between both side ends of the mat element at the lumbar area, for distributing an adjustment force for the adjustment of the lumbar area of the suspension mat; a wire cable extending along and being attached to the lumbar plate; and an actuator for adjusting the effective length of the wire cable.

Due to a lumbar plate, that is arranged in the lumbar area of the suspension mat and that is actuated directly by a wire cable extending along the lumbar plate the shape and the suspension effect of the suspension mat can be adjusted in the lumbar area. The pulling force applied by actuator to the wire cable directly acts onto the lumbar plate that determines the shape of the lumbar area of the suspension mat. If the wire cable is shortened the lumbar plate is pulled further to the front of the backrest, when the suspension mat is installed into a frame of the backrest. The lumbar plate distributes the adjustment forces to the seat cushioning such that a very comfortable cushioning behavior is achieved. Further, the use of a lumbar plate that is actuated by a wire cable leads to a reduction of the complexity of the construction, reduces assembly effort and reduces overall costs. The wire cable is only guided through the lumbar plate, which makes lumbar plate actuation very easy. The use of Bowden cables can be minimized or eliminated at all. Further, by avoiding Bowden cables and fixtures thereof, the suspension mat is lighter in weight compared to the prior art.

Preferably the lumbar plate consists of a plastic material. Such plastic lumbar plate is easy to produce, lightweight and can be provided very stable for transmitting the desired actuation forces to the lumbar area of the backrest. On the other hand it can be provided flexible to provide the desired adaption to the passengers back for providing the desired seating comfort.

Preferably, the mat element comprises at least two horizontal wires and the lumbar plate comprises attachment hooks for mounting the lumbar plate to the two horizontal wires. By such attachment hooks the lumbar plate can be easily hooked to two of the horizontal wires for an attachment without the need for further assembly elements or assembly tool. Since the lumbar plate is preferably attached to the horizontal wires it can also be used for mat elements of different widths.

Preferably, the mat element comprises at least two vertical wires and the lumbar plate preferably comprises attachment hooks for mounting the lumbar plate to the two vertical wires. By such attachment hooks the lumbar plate can be easily hooked to the two vertical wires for an attachment without the need for further assembly elements or assembly tool.

Preferably, the attachment hooks for mounting the lumbar plate to the vertical wires comprise a length in X-direction for an attachment of mat elements of different widths.

Preferably, the length of the lumbar plate measured at the attachment hooks is longer than the width of the mat element at the lumbar area.

Preferably, the lumbar plate is integral with the mat element. For example, the lumbar plate can be a plastic part that is integrally molded with the plastic mat element. Therefore, after molding no assembly of the lumbar plate to the mat element is necessary.

Preferably, the lumbar plate is arched, when the lumbar plate is in a non-actuated state. The lumbar plate is preferably arched, when the suspension mat is in the not-actuated state or is not loaded. For lumbar plates not integrated with the mat element, this arched shape provides a clearance between lumbar plate and mat element which allows flexibility of the suspension mat in the lumbar area.

Preferably, the lumbar plate comprises cable fixture elements for attaching the wire cable wire to the lumbar plate. By the cable fixture elements, the wire cable is directly attached to the lumbar plate without the need for additional fixture elements. Preferably the cable fixture elements are provided such that the wire cable is securely held at the lumbar plate but can axially slide along the lumbar plate. This allows for a symmetric displacement of the lumbar plate, even if the actuator is attached to one end of the wire cable, only.

Preferably, the cable fixture elements are hooks. Therefore, the wire cable can be easily and fast hooked into the cable fixture elements without the need for using tools.

Preferably, the lumbar plate comprises wings at the lateral ends, which extend laterally beyond both side ends of the mat element at the lumbar area, for guiding the wire cable. By the wings the lumbar plate is provided wider than the distance between both ends of the mat element at the lumbar area. This increases the surface area of the lumbar plate for a better force distribution to the backrest cushioning and further guides the wire cable such that is does preferably not contact the seat cushioning directly. This reduces friction and prevents a damage of the seat cushioning.

Preferably, the wings are curved towards the front side of the suspension mat. The curved shape of the wings adapts the lumbar plate to the shape of the backrest and reduces friction when guiding the wire cable.

Preferably, the lumbar plate comprises a height in Y-direction of at least 20 mm. This provides a good pressure distribution of the wire along the lumbar plate. Preferably, the lumbar plate has a band-like shape, wherein the band is arranged along the X-direction.

Preferably, the horizontal wires comprise a non-linear shape such that the suspension mat is elastically extendable in X-direction. By such elasticity in X-direction the suspension mat can be easily mounted to a backrest frame by hooking-in. Further, the elasticity of the suspension mat provides the desired seating comfort.

Preferably the mat element comprises elastic portions that are elastically extendable in X-direction. This further provides elasticity of the mat element in X-direction for mounting to a backrest frame and for adjusting the seating comfort.

Preferably, the mat element further comprises mounting hooks attached to and extending laterally from the side ends of the mat element. By such mounting hooks the suspension mat can be easily mounted to a backrest frame by hooking-in.

Preferably, the wire cable is directly connected to the actuator, to the lumbar plate and can be directly connected to the seat frame, without the use of a cable sheath. This reduces the effort for assembly of a Bowden cable, the associated weight and the associated costs.

Preferably, the actuator further comprises a curved cable guide for guiding the wire cable from the outlet of the actuator in direction to the lumbar plate. The cable guide reduces friction and guaranties as defined path for the wire cable from the actuator to the lumbar plate.

The above mentioned problems are also solved by a method for the assembly of a suspension mat, comprising the following steps:
a. providing a mat element comprising a grid of vertical wires and horizontal wires, extending between the vertical wires;
b. hooking in a lumbar plate to the lumbar area of the mat element, wherein the lumbar plate having a plate shape, and extending at least between both side ends of the mat element at the lumbar area, for distributing an adjustment force for the adjustment of the lumbar area of the suspension mat;
c. hooking in a wire cable to the lumbar plate, wherein the wire cable extends along the lumbar plate; and
d. attaching an actuator for adjusting the effective length of the wire cable to a first end of the wire cable.

Due to hooking in of the lumbar plate to the mat element and the wire cable to the lumbar plate the assembly is done in a fast and easy way, preferably without the use of any tools. This safes assembly time and associated assembly costs and eliminates assembly errors.

Preferably, the method further comprises the step of fixing the wire cable at a second end thereof to a seat frame by means of a mounting element of the wire cable.

### 4. Short description of the drawings

In the following, preferred embodiments of the invention are disclosed by reference to the accompanying figures, in which shows:
- Fig. 1:: a front view of a first preferred embodiment of a suspension mat;
- Fig. 2:: a back view of the first preferred embodiment of Fig. 1;
- Fig. 3:: a back view of a second preferred embodiment of a suspension mat;
- Fig. 4:: a three-dimensional view of a back-side detail of the embodiment of Fig. 1;
- Fig. 5:: a three-dimensional view of a back-side detail of the embodiment of Fig. 3;
- Fig. 6:: a three-dimensional view of a front-side of a lumbar plate of the embodiment of Fig. 1;
- Fig. 7:: a front view of a third preferred embodiment of a suspension mat;
- Fig. 8:: a back view of the third preferred embodiment of Fig. 7;
- Fig. 9:: a three-dimensional view of a detail of the third embodiment;
- Fig. 10:: a back view of a fourth preferred embodiment of a suspension mat;
- Fig. 11:: a top view of the fourth preferred embodiment of Fig. 10;
- Fig. 12:: a preferred embodiment of a mat element and a preferred embodiment of a lumbar plate of the fourth embodiment; and
- Fig. 13:: a three-dimensional view of a detail of the fourth embodiment.

### 5. Detailed description of preferred embodiments

In the following, preferred embodiments of the invention are described in detail with respect to the figures.

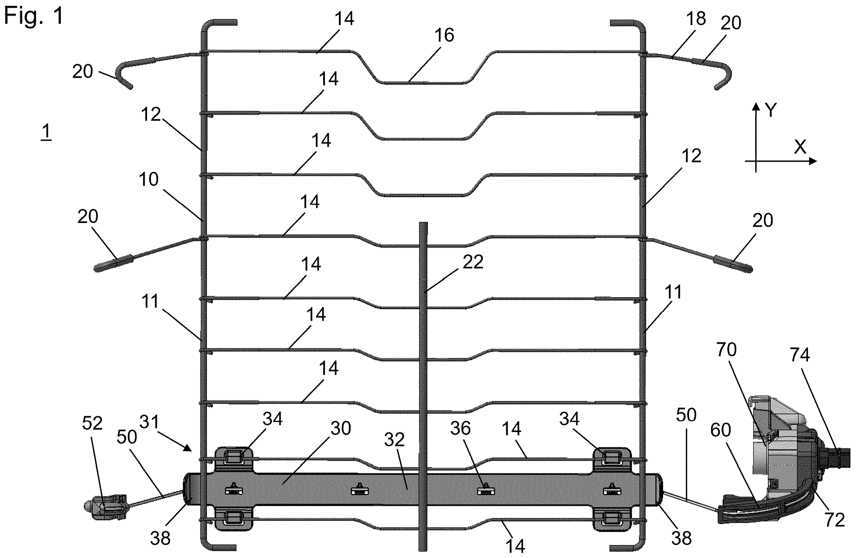

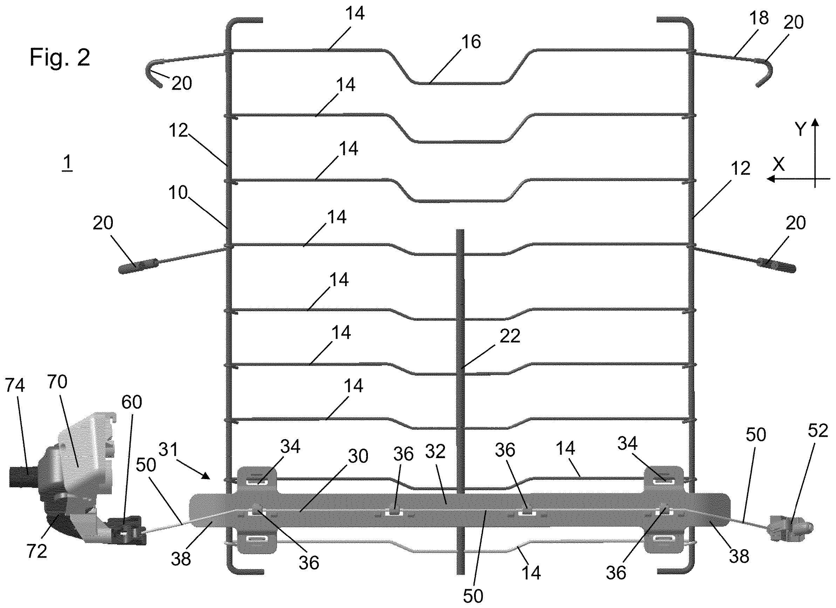

Fig. 1 shows front view, facing to the cushion of the backrest, and Fig. 2 shows a rear view of a first preferred embodiment of a suspension mat 1. The suspension mat 1 comprises a mat element 10, a lumbar plate 30, a wire cable 50 and an actuator 70 and can be adjusted in the lumbar area 31 thereof. The suspension mat 1 can be installed within a frame of a backrest of a vehicle seat (not shown) and serves for supporting a foam cushion (not shown) of the backrest of the seat.

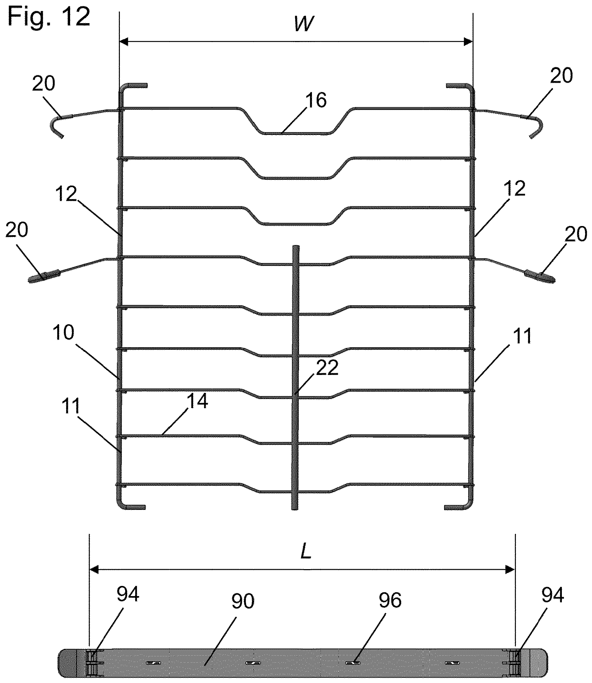

As shown also in Fig. 12, the mat element 10 comprises a grid of two vertically arranged wires 12 and a plurality of horizontal wires 14, which extend between the vertical wires 12 which define the side ends 11 of the mat element 10. The preferred nine horizontal wires 14 are wound around the vertical wires 12 for connecting these elements. The horizontal wires 14 have an angled central portion 16 such that they have a non-linear shape. The non-linear shape of the horizontal wires 14 provides elasticity of the mat element 10 in X-direction. This provides a desired elastic support of the backrest cushion of the vehicle seat. Further, due to the elasticity of the mat element 10 the mounting of the suspension mat 1 into the backrest frame is facilitated and can be done by simply hooking in the suspension mat 1 into the backrest frame. To do so the mat element 10 further comprises preferably four mounting hooks 20 which are attached to the vertical wires 12 and which extend laterally from the side ends 11 of the mat element 10. Preferably the mounting hooks 20 are formed of wire extensions 18 of selected ones of the horizontal wires 14. In the shown embodiment the mounting hooks 20 are extensions 18 of the topmost and fourth horizontal wires 14 from the top of the mat element 10. This facilitates production and eliminates the need for additional hooks or other assembly means. Preferably the mounting hooks 20 are covered by a plastic material for avoiding noise when installed on a metal backrest frame. The lower six horizontal wires 14 of the mat element 10 are connected to each other at the centered angled portion 16 thereof by a vertical connector bar 22. The connector bar 22 is preferably made by over-molding a plastic material over the central part of the horizontal wires after the grid of the mat element 10 is formed. The connector bar 22 improves stiffness of the suspension mat 1 in the lower halve thereof.

The lumbar plate 30 is mounted at the lumbar area 31 of the mat element 10 for selectively adjusting the shape and suspension behavior of the suspension mat 1 in the lumbar area 31. The lumbar plate 30 is an injection molded unitary plastic element, having a flat, plate shaped body 32 for distributing an adjustment force for the adjustment of the lumbar area 31 of the suspension mat 1. The lumbar plate 30 extends at least between the two vertical wires 12. In the shown embodiment, the lumbar plate comprises at the lateral ends thereof wings 38 that extend the width of the lumbar plate 30 to a width wider than the distance between the two vertical wires 12. These provide a better force distribution and serves as guide for the wire cable 50. Preferably the wings 38 are curved towards the front side of the suspension mat 1 for adapting to the backrest's shape and for reducing the friction when guiding the wire cable 50 which glides over the wings 38 during adjustment.

In the embodiment of Figs. 1 and 2 the lumbar plate 30 comprises four attachment hooks 34 for mounting the lumbar plate 30 to two horizontal wires, in that example, to the lowest two horizontal wires. By such attachment hooks 34 the lumbar plate 30 can easily and without any tools hooked to the horizontal wires 14. Since the distance in X-direction of the attachment hooks 34 is lower than the distance between the vertical wires 12 the mat element 10 and the lumbar plate 30 can slide relative to each other in X-direction. This allows on the one hand a lateral elasticity of the mat element 10 and on the other hand improves adjustable support of the lumbar region by the - in X-direction - non-elastic lumbar plate 30. Further, it is possible to use the lumbar plate 30 together with mat elements 30 of different widths.

The lumbar plate 30 further comprises preferably a plurality of cable fixture elements 36, in that case 4, in the form of hooks 36 that are arranged on the back side of the lumbar plate 30. The four cable fixture elements 36 are preferably distributed over the length of the lumbar plate 30 and are arranged such that the wire cable 50 is essentially guided along the center line of the lumbar plate 30 in X-direction. The hooks 36 allow an easy and fast mounting of the wire cable 50 to the lumbar plate 30 without tools.

The wire cable 50 serves for an adjustment of the lumbar area 31 of the suspension mat 1. The wire cable 50 preferably is a metal cable that consists of a plurality of metal filaments, which makes the wire cable 50 flexible but non-elastic. It serves for pulling the lumbar plate 30 to the frame of the backrest of the vehicle seat in an adjustable manner. If the effective length of the wire cable 50 is reduced by the actuator 70 the lumbar plate 30 is pulled closer to the backrest such that the lumbar region 31 of the suspension mat 1 obtains a curvature in direction to the cushion of the backrest. This further increases the curvature and stiffens the lumbar region of the backrest according to the passenger's needs.

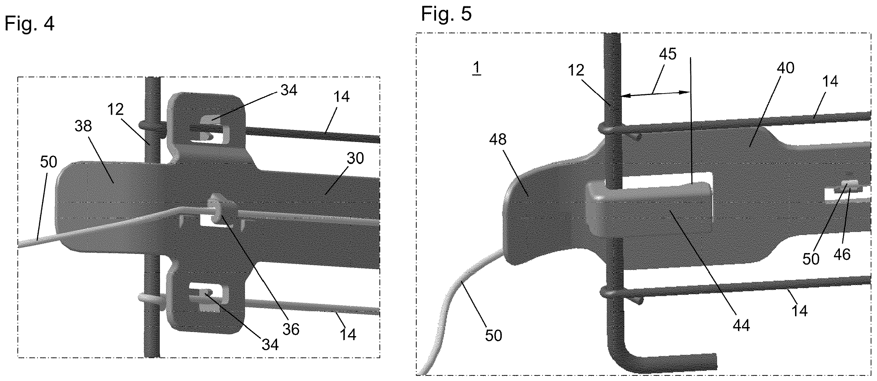

Figure 4 shows a detailed view of one end of the lumbar plate 30 showing details of the hooks 34 for attachment to the horizontal wires 14 and details of the hooks for the attachment of the wire cable 50 along the lumbar plate 30.

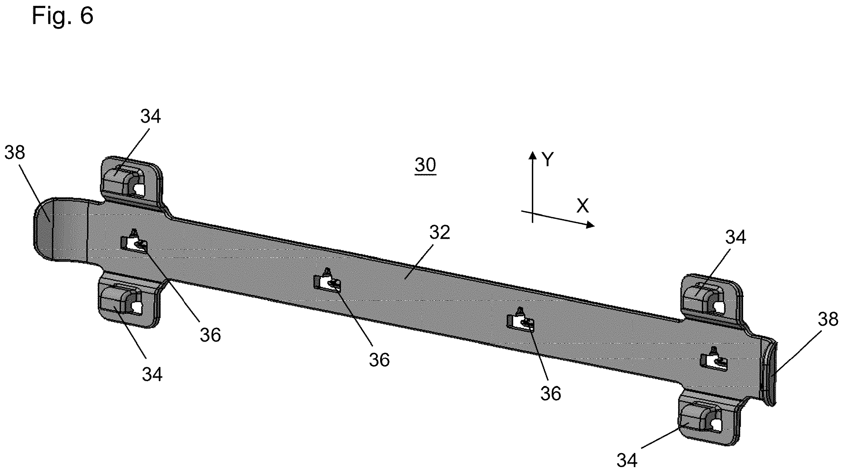

Figure 6 shows the lumbar plate 30 of the first embodiment. The height in Y-direction of the lumbar plate 30 is preferably more than 20 mm. Thus, the lumbar plate 30 preferably has a band-like shape, wherein the band is arranged along the X-direction..

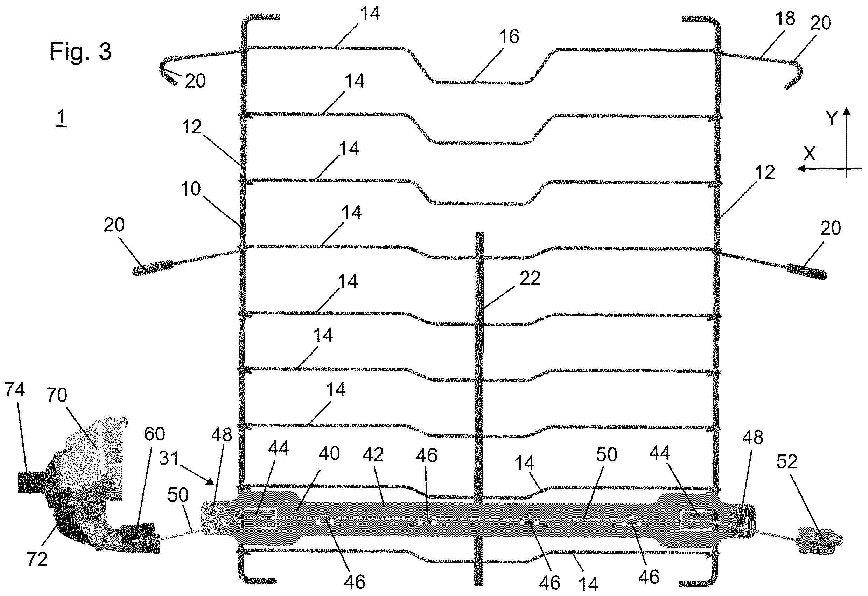

The Figures 3 and 5 show a second embodiment of the suspension mat 1 which differs only by the lumbar plate 40 from the first embodiment of Figs. 1, 2 and 4. All other elements of the suspension mat 1 may be identical to the first embodiment. Fig. 3 shows the back side of the suspension mat 1.

In the second embodiment the lumbar plate 40 is mounted to the vertical wires 12 by two hooks 44. The hooks 44 have a certain length in X-direction which provides a play 45 between the lumbar plate 40 and the mat element 10, such that the lumbar plate 40 can be used for mat elements 10 of different widths.

The other elements of the lumbar plate 40, like the body 42, the cable fixture elements 46 and the wings 48 correspond to the corresponding elements 32, 36, 38 of the first embodiment.

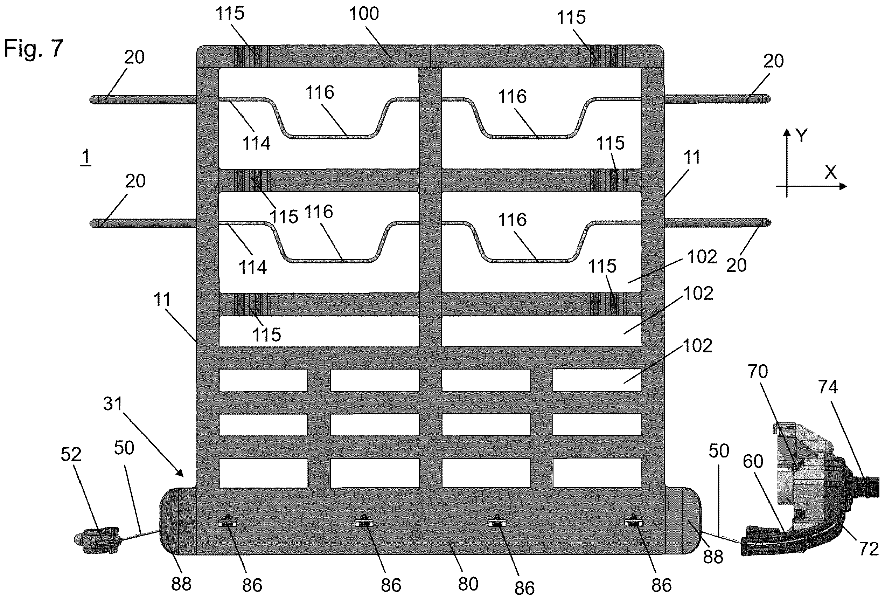

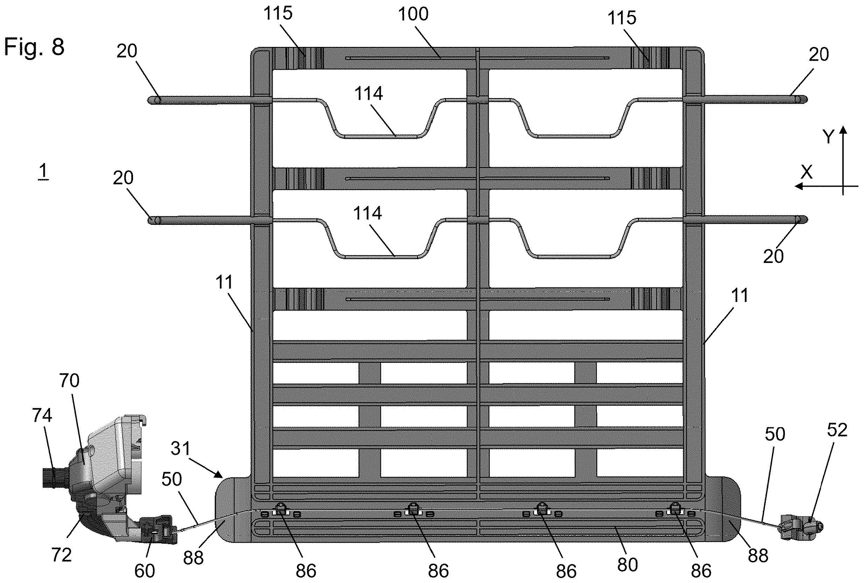

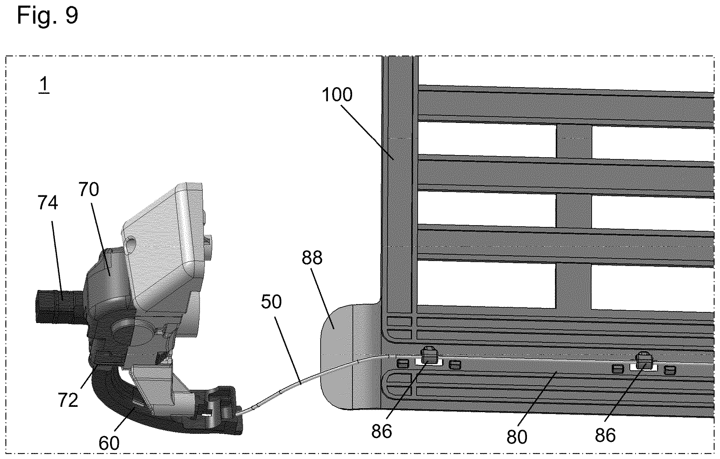

The Figures 7, 8 and 9 show a third embodiment of the suspension mat 1 which differs from the first and second embodiments by the mat element 100 and the lumbar plate 80. The other elements of the suspension mat 1 may be identical to the first and second embodiment. Fig. 7 shows the front side and Fig. 8 and 9 show the back side of the suspension mat 1 of the third embodiment.

In the third embodiment the mat element 100 is an integral, one-piece, plastic, generally plate-shaped element made preferably of a plastic material by injection molding. The mat element 100 provides openings 102 of various sizes and shapes for adjusting the desired stiffness and flexibility of the mat element 100 and for allowing ventilation of the backrest cushioning (not shown). Two horizontal wires 114 are integrated into the upper part of the plastic mat element 100, preferably by over-molding. The horizontal wires 114 improve the stability of the mat element 100 in the upper area thereof and extend over the side ends 11 of the mat element 100 as mounting hooks 20. The mounting hooks 20 are preferably covered by plastic material to avoid noise after assembly into a backrest frame (not shown). Preferably, the plastic cover of the hooks 20 is simultaneously produced with the injection molding of the mat element 100. The mat element 100 further provides elastic portions 115, which provide elasticity of the suspension mat 1 in X-direction in the upper area of the suspension mat 1. Such elasticity in X-direction is further provided, since the horizontal wires 114 have non-linear shaped portions 116.

The lumbar plate 80 of the third embodiment is an integral element of the mat element 100, particularly it is commonly injection molded and one-piece with the mat element 100. In the third embodiment the lumbar plate 80 is a generally plate-shaped plastic element that is integrally connected to the mat element 100 at the lower end thereof. The general outer shape of the lumbar plate 80 corresponds to the lumbar plates 30, 40 of the first and second embodiments. The lumbar plate 80 comprises wings 88 at the lateral sides, which extend laterally beyond both side ends 11 of the mat element 100. The lumbar plate 80 further comprises preferably four cable fixture elements 86 in form of hooks 86 for slideably fixing the wire cable 50 to the back side of the lumbar plate 80.

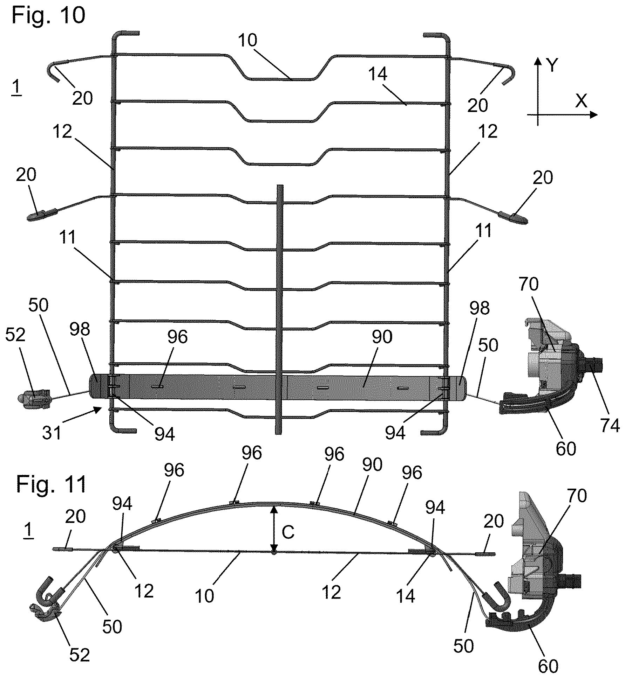

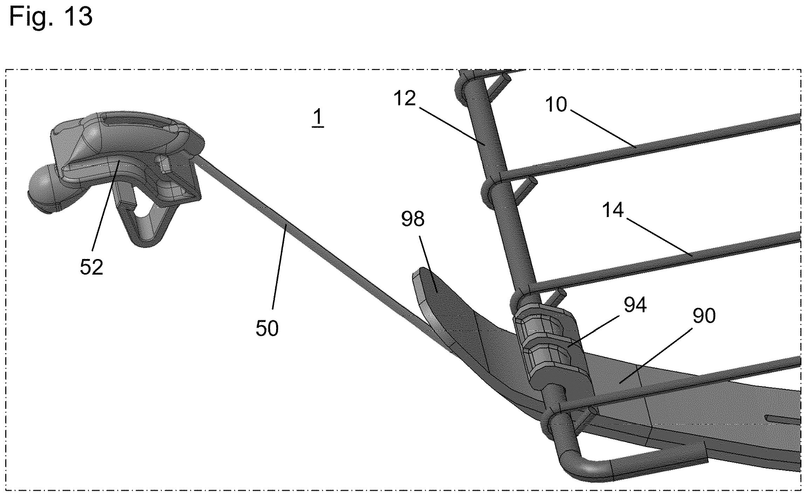

The Figures 10 to 13 show a fourth embodiment of the suspension mat 1 which differs from the first and second embodiments by the lumbar plate 90. The other elements of the suspension mat 1 may be identical or similar to the first and second embodiment. The actuation of the lumbar plate 90 is done like in the other embodiments via a wire cable 50 that extends along the lumbar plate 90 and is attached thereto by cable fixture elements 96, preferably hooks 96. The lumbar plate 90 further comprises wings 98 at the lateral ends thereof, which extend laterally beyond both side ends 11 of the mat element 10. Fig. 10 shows the back side and Fig. 11 the top side of the suspension mat 1 of the fourth embodiment.

In the fourth embodiment the lumbar plate 90, is a generally plate-shaped one-piece plastic element that is connected to the vertical wires 12 of the mat element 10 by two hooks 94. In another embodiment (not shown) the lumbar plate 90 can be connected to the mat element 10 by horizontal wires 14. As it can be seen from Fig. 12, the length L of the lumbar plate 90 measured as distance of the mounting hooks 94 is longer than the width W of the mat element 10 measured from side end 11 to side end 11. Preferably, the length L is 3% to 15%, or preferably 5% to 10% longer than the width W. This has the effect, that if the lumbar plate 90 is mounted by the hooks 94 to the vertical wires 12 of the mat element 10 the lumbar plate 90 is bend and remains arched to the back side of the suspension mat 1 as shown in Fig. 11. This arching of the lumbar plate 90 provides a clearance C between the horizontal wires 14 of the mat element 10 and the lumbar plate 90, which improves flexibility of the suspension mat 1 in the lumbar area 31. This slight flexibility is particularly preferred under small loads, i.e. for the lumbar adjustment of lightweight passengers.

The actuator 70 of all four embodiments adjusts the effective length of the wire cable 50. The actuator 70 is connected to the wire cable 50 and by rotation of the shaft 74 the wire cable 50 is drawn into or released from the actuator 70. A hand wheel or a hand lever (not shown) may be attached to shaft 74 for manual adjustment of the lumbar area 31 by a passenger. In an alternative embodiment the actuator 70 may be driven by an electric motor (not shown) for an electric adjustment of the lumbar area 31. The actuator 70 is rigidly mounted to the backrest frame (not shown) of the vehicle seat.

As shown in the Figures the wire cable 50 is used without any cable sheath. For better guiding the wire cable 50 from the actuator 70 and for reducing friction the actuator 70 comprises a curved cable guide 60 at the outlet 72 of the actuator 70. This curved cable guide has a rim-shaped cross-section and consists preferably of a plastic material. It guides the wire cable 50 on a steady path from the outlet 72 in direction to one end of the lumbar plate 30, 40, 80, 90. Although only one wire cable 50 is used and the wire cable 50 is attached only at one end thereof to the actuator 70 and at the other end thereof to the frame of the backrest a symmetric actuation of the lumbar plate 30, 40, 80, 90 is given, since the wire cable 50 is able to slide in X-direction with respect to the lumbar plate 30, 40, 80, 90. This is ensured by the shape and the size of the attachment hooks 36, 46, 86, 96 with respect to the wire cable 50.

The wire cable 50 comprises at the second end thereof a plastic mounting element 52, which is preferably over-molded to the wire cable end fitting of the wire cable 50. The mounting element 52 preferably comprises a snapping hook such that it can be fixed to the backrest frame by snapping in. This further facilitates assembly of the suspension mat 1 to the backrest of the seat.

**List of reference signs:**
- 1: suspension mat
- 10: mat element
- 12: vertical wires
- 11: side ends of mat element
- 14: horizontal wires
- 16: angled central portion
- 18: wire extensions
- 20: mounting hooks
- 30, 40, 80, 90: lumbar plate
- 31: lumbar area
- 32, 42: body
- 34, 44, 94: attachment hooks for lumbar plate
- 36, 46, 86, 96: cable fixture elements
- 38, 48, 88, 98: wings
- 50: wire cable
- 52: mounting element
- 60: cable guide
- 70: actuator
- 72: outlet
- 74: shaft
- 100: one-piece mat element
- 102: openings
- 114: horizontal wires
- 115: elastic portions
- 116: non-linear portions

## Claims

1. Suspension mat (1) for a backrest of a vehicle seat, comprising:
a. a mat element (10, 100);
b. a lumbar plate (30, 40, 80, 90) arranged at the lumbar area (31) of the mat element (10, 100), having a plate shape, and extending at least between both side ends (11) of the mat element (10) at the lumbar area (31), for distributing an adjustment force for the adjustment of the lumbar area (31) of the suspension mat (1);
c. a wire cable (50) extending along and being attached to the lumbar plate (30, 40, 80, 90); and
d. an actuator (70) for adjusting the effective length of the wire cable (50).

2. Suspension mat according to claim 1, wherein the lumbar plate (30, 40, 80, 90) consists of a plastic material.

3. Suspension mat according to one of the claims 1 or 2, wherein the mat element (10) comprises at least two horizontal wires (14) and wherein the lumbar plate (30,90) comprises attachment hooks (34) for mounting the lumbar plate (30) to the two horizontal wires (14, 94).

4. Suspension mat according to one of the claims 1 or 2, wherein the mat element (10) comprises at least two vertical wires (12) and wherein the lumbar plate (40, 90) comprises attachment hooks (44, 94) for mounting the lumbar plate (40, 90) to the two vertical wires (12).

5. Suspension mat according to claim 4, wherein the attachment hooks (44) for mounting the lumbar plate (40) to the vertical wires (12) comprise a length in X-direction for an attachment of mat elements (10) of different widths.

6. Suspension mat according to one of the claims 1 to 5, wherein the length (L) of the lumbar plate (90) measured at the attachment hooks (94) is longer than width (W) of the mat element (10, 100) at the lumbar area (31).

7. Suspension mat according to one of the claims 1 or 2, wherein the lumbar plate (80) is integral with the mat element (100).

8. Suspension mat according to one of the claims 1 to 7, wherein the lumbar plate (90) is arched, when the lumbar plate (90) is in non-actuated state.

9. Suspension mat according to one of the claims 1 to 8, wherein the lumbar plate (30, 40, 80, 90) comprises cable fixture elements (36, 46, 86, 96) for attaching the wire cable (50) to the lumbar plate (30, 40, 80, 90).

10. Suspension mat according to claim 9, wherein the cable fixture elements (36, 46, 86, 96) are hooks (36, 46, 86, 96).

11. Suspension mat according to one of the claims 1 to 10, wherein the lumbar plate (30, 40, 80, 90) comprises wings (38, 48, 88, 98) at the lateral ends, which extend laterally beyond both side ends (11) of the mat element (10, 100) at the lumbar area (31), for guiding the wire cable (50).

12. Suspension mat according to one of the claims 1 to 11, wherein the lumbar plate (30, 40, 80, 90) comprises a height in Y-direction of at least 20 mm.

13. Suspension mat according to one of the claims 1 to 12, wherein the mat element (10, 100) further comprises mounting hooks (20) attached to and extending laterally from the side ends (11) of the mat element (10, 100).

14. Suspension mat according to one of the claims 1 to 13, wherein the wire cable (50) is directly connected to the actuator (70), to the lumbar plate (30, 40, 80, 90) and can be directly connected to the seat frame, without the use of a cable sheath.

15. Method for the assembly of a suspension mat (1), comprising the following steps:
a. providing a mat element (10) comprising a grid of vertical wires (12) and horizontal wires (14) extending between the vertical wires (12);
b. hooking in a lumbar plate (30, 40, 90) to the lumbar area (31) of the mat element (10), wherein the lumbar plate (30, 40, 90) having a plate shape, and extending at least between both side ends (11) of the mat element (10) at the lumbar area (31), for distributing an adjustment force for the adjustment of the lumbar area (31) of the suspension mat (1);
c. hooking in a wire cable (50) to the lumbar plate (30, 40, 90), wherein the wire cable (50) extends along the lumbar plate (30, 40, 90); and
d. attaching an actuator (70) for adjusting the effective length of the wire cable (50) to a first end of the wire cable (50).

## Patentansprüche

1. Aufhängungsmatte (1) für eine Rückenlehne in einem Fahrzeugsitz umfassend:
a. ein Mattenelement (10, 100);
b. eine Lendenwirbelplatte (30, 40, 80, 90), die am Lendenwirbelbereich (31) des Mattenelements (10, 100) angeordnet ist, die eine Plattenform aufweist und sich mindestens zwischen beiden Seitenenden (11) des Mattenelements (10) am Lendenwirbelbereich (31) erstreckt, um eine Einstellkraft für die Einstellung des Lendenwirbelbereichs (31) der Aufhängungsmatte (1) zu verteilen;
c. ein Drahtseil (50), das sich entlang der Lendenwirbelplatte (30, 40, 80, 90) erstreckt und an dieser angebracht ist; und
d. einen Aktuator (70) zum Einstellen der effektiven Länge des Drahtseils (50).

2. Aufhängungsmatte nach Anspruch 1, wobei die Lendenwirbelplatte (30, 40, 80, 90) aus einem Kunststoffmaterial besteht.

3. Aufhängungsmatte nach einem der Ansprüche 1 oder 2, wobei das Mattenelement (10) mindestens zwei horizontale Drähte (14) umfasst und wobei die Lendenwirbelplatte (30, 90) Befestigungshaken (34) zum Montieren der Lendenwirbelplatte (30) an den zwei horizontalen Drähten (14, 94) umfasst.

4. Aufhängungsmatte nach einem der Ansprüche 1 oder 2, wobei das Mattenelement (10) mindestens zwei vertikale Drähte (12) umfasst und wobei die Lendenwirbelplatte (40, 90) Befestigungshaken (44, 94) zum Montieren der Lendenwirbelplatte (40, 90) an den zwei vertikalen Drähten (12) umfasst.

5. Aufhängungsmatte nach Anspruch 4, wobei die Befestigungshaken (44) zum Montieren der Lendenwirbelplatte (40) an den vertikalen Drähten (12) eine Länge in X-Richtung für eine Befestigung von Mattenelementen (10) unterschiedlicher Breiten umfassen.

6. Aufhängungsmatte nach einem der Ansprüche 1 bis 5, wobei die an den Befestigungshaken (94) gemessene Länge (L) der Lendenwirbelplatte (90) länger als die Breite (W) des Mattenelements (10, 100) am Lendenwirbelbereich (31) ist.

7. Aufhängungsmatte nach einem der Ansprüche 1 oder 2, wobei die Lendenwirbelplatte (80) einstückig mit dem Mattenelement (100) ist.

8. Aufhängungsmatte nach einem der Ansprüche 1 bis 7, wobei die Lendenwirbelplatte (90) gewölbt ist, wenn sich die Lendenwirbelplatte (90) in einem nicht betätigten Zustand befindet.

9. Aufhängungsmatte nach einem der Ansprüche 1 bis 8, wobei die Lendenwirbelplatte (30, 40, 80, 90) Seilbefestigungselemente (36, 46, 86, 96) zum Befestigen des Drahtseils (50) an der Lendenwirbelplatte (30, 40, 80, 90) umfasst.

10. Aufhängungsmatte nach Anspruch 9, wobei die Seilbefestigungselemente (36, 46, 86, 96) Haken (36, 46, 86, 96) sind.

11. Aufhängungsmatte nach einem der Ansprüche 1 bis 10, wobei die Lendenwirbelplatte (30, 40, 80, 90) Flügel (38, 48, 88, 98) an den seitlichen Enden umfasst, die sich seitlich über beide Seitenenden (11) des Mattenelements (10, 100) am Lendenwirbelbereich (31) hinaus erstrecken, um das Drahtseil (50) zu führen.

12. Aufhängungsmatte nach einem der Ansprüche 1 bis 11, wobei die Lendenwirbelplatte (30, 40, 80, 90) eine Höhe in Y-Richtung von mindestens 20 mm umfasst.

13. Aufhängungsmatte nach einem der Ansprüche 1 bis 12, wobei das Mattenelement (10, 100) ferner Montagehaken (20) umfasst, die an den Seitenenden (11) des Mattenelements (10, 100) angebracht sind und sich seitlich von diesen erstrecken.

14. Aufhängungsmatte nach einem der Ansprüche 1 bis 13, wobei das Drahtseil (50) direkt mit dem Aktuator (70), mit der Lendenwirbelplatte (30, 40, 80, 90) verbunden ist und direkt mit dem Sitzrahmen verbunden werden kann, ohne die Verwendung eines Kabelmantels.

15. Verfahren für die Montage einer Aufhängungsmatte (1) umfassend die folgenden Schritte:
a. Bereitstellen eines Mattenelements (10) umfassend ein Gitter von vertikalen Drähten (12) und horizontalen Drähten (14), die sich zwischen den vertikalen Drähten (12) erstrecken;
b. Einhaken einer Lendenwirbelplatte (30, 40, 90) in den Lendenwirbelbereich (31) des Mattenelements (10), wobei die Lendenwirbelplatte (30, 40, 90) eine Plattenform aufweist und sich mindestens zwischen beiden Seitenenden (11) des Mattenelements (10) am Lendenwirbelbereich (31) erstreckt, um eine Einstellkraft für die Einstellung des Lendenwirbelbereichs (31) der Aufhängungsmatte (1) zu verteilen;
c. Einhaken eines Drahtseils (50) in die Lendenwirbelplatte (30, 40, 90), wobei sich das Drahtseil (50) entlang der Lendenwirbelplatte (30, 40, 90) erstreckt; und
d. Befestigen eines Aktuators (70) zum Einstellen der effektiven Länge des Drahtseils (50) an einem ersten Ende des Drahtseils (50).

## Revendications

1. Armature de suspension (1) pour un dossier d'un siège de véhicule, comprenant :
a. un élément d'armature (10, 100) ;
b. une plaque lombaire (30, 40, 80, 90) située au niveau de la région lombaire (31) de l'élément d'armature (10, 100), possédant une forme de plaque et s'étendant au moins entre deux extrémités latérales (11) de l'élément d'armature (10) au niveau de la région lombaire (31), pour exercer une force d'ajustement pour l'ajustement de la région lombaire (31) de l'armature de suspension (1) ;
c. un câble en fil (50) s'étendant le long de la plaque lombaire (30, 40, 80, 90) et fixé à celle-ci ; et
d. un actionneur (70) pour ajuster la longueur effective du câble en fil (50).

2. Armature de suspension selon la revendication 1, dans laquelle la plaque lombaire (30, 40, 80, 90) est constituée d'une matière plastique.

3. Armature de suspension selon l'une des revendications 1 ou 2, dans laquelle l'élément d'armature (10) comprend au moins deux fils horizontaux (14), et dans laquelle la plaque lombaire (30, 90) comprend des crochets de fixation (34) pour le montage de la plaque lombaire (30) sur les deux fils horizontaux (14, 94).

4. Armature de suspension selon l'une des revendications 1 ou 2, dans laquelle l'élément d'armature (10) comprend au moins deux fils verticaux (12), et dans laquelle la plaque lombaire (40, 90) comprend des crochets de fixation (44, 94) pour le montage de la plaque lombaire (40, 90) aux deux fils verticaux (12).

5. Armature de suspension selon la revendication 4, dans laquelle les crochets de fixation (44) pour le montage de la plaque lombaire (40) sur les fils verticaux (12) présentent une longueur dans la direction X pour une fixation d'éléments d'armature (10) de largeurs différentes.

6. Armature de suspension selon l'une des revendications 1 à 5, dans laquelle la longueur (L) de la plaque lombaire (90) mesurée au niveau des crochets de fixation (94) est plus grande que la largeur (W) de l'élément d'armature (10, 100) au niveau de la région lombaire (31) .

7. Armature de suspension selon l'une des revendications 1 ou 2, dans laquelle la plaque lombaire (80) est formée d'une seule pièce avec l'élément d'armature (100).

8. Armature de suspension selon l'une des revendications 1 à 7, dans laquelle la plaque lombaire (90) est cintrée lorsque la plaque lombaire (90) n'est pas dans un état actionné.

9. Armature de suspension selon l'une des revendications 1 à 8, dans laquelle la plaque lombaire (30, 40, 80, 90) comprend des éléments de fixation de câble (36, 46, 86, 96) pour la fixation du câble en fil (50) à la plaque lombaire (30, 40, 80, 90).

10. Armature de suspension selon la revendication 9, dans laquelle les éléments de fixation de câble (36, 46, 86, 96) sont des crochets (36, 45, 86, 96).

11. Armature de suspension selon l'une des revendications 1 à 10, dans laquelle la plaque lombaire (30, 40, 80, 90) comprend, au niveau des extrémités latérales, des ailes (38, 48, 88, 98) qui s'étendent latéralement au-delà des deux extrémités latérales (11) de l'élément d'armature (10, 100) au niveau de la région lombaire (31), pour guider le câble en fil (50).

12. Armature de suspension selon l'une des revendications 1 à 11, dans laquelle la plaque lombaire (30, 40, 80, 90) présente dans la direction Y une hauteur d'au moins 20 mm.

13. Armature de suspension selon l'une des revendications 1 à 12, dans laquelle l'élément d'armature (10, 100) comprend en outre des crochets de montage (20) solidarisés aux extrémités latérales (11) de l'élément d'armature (10, 100) et s'étendant latéralement à partir de celles-ci.

14. Armature de suspension selon l'une des revendications 1 à 13, dans laquelle le câble en fil (50) est directement relié à l'actionneur (70) et à la plaque lombaire (30, 40, 80, 90), et peut être directement relié au châssis du siège, sans utiliser de gaine de câble.

15. Procédé d'assemblage d'une armature de suspension (1), comprenant les étapes suivantes :
a. obtention d'un élément d'armature (10) comprenant une grille de fils verticaux (12) et de fils horizontaux (14) s'étendant entre les fils verticaux (12) ;
b. accrochage d'une plaque lombaire (30, 40, 90) à la région lombaire (31) de l'élément d'armature (10), la plaque lombaire (30, 40, 90) ayant une forme de plaque et s'étendant au moins entre deux extrémités latérales (11) de l'élément d'armature (10) au niveau de la région lombaire (31), pour exercer une force d'ajustement pour l'ajustement de la région lombaire (31) de l'armature de suspension (1) ;
c. accrochage d'un câble en fil (50) à la plaque lombaire (30, 40, 90), le câble en fil (50) s'étendant le long de la plaque lombaire (30, 40, 90) ; et
d. fixation à une première extrémité du câble en fil (50) d'un actionneur (70) pour l'ajustement de la longueur effective du câble en fil (50).
